# EUROPÄISCHE PATENTSCHRIFT

(11) **EP 1 831 862 B1**
(45) Veröffentlichungstag und Bekanntmachung des Hinweises auf die Patenterteilung: **09.02.2011**
(21) Anmeldenummer: 05850173.5
(22) Anmeldetag: 19.12.2005
(51) Int. Cl.: G09F 3/03

(54) **SIEGELEINRICHTUNG**
SEALING DEVICE
DISPOSITIF DE SCELLAGE

(30) Priorität: 23.12.2004 DE 102004063487
(43) Veröffentlichungstag der Anmeldung: 12.09.2007
(73) Patentinhaber: Smartrac IP B.V., 1077 XX Amsterdam (NL)
(72) Erfinder: RIETZLER, Manfred, 87616 Marktoberdorf (DE)
(74) Vertreter: Tappe, Hartmut
(86) Internationale Anmeldenummer: PCT/DE2005/002282
(87) Internationale Veröffentlichungsnummer: WO 2006/066555

(56) Entgegenhaltungen:
- EP-A- 0 978 812
- US-A- 3 712 655
- US-A- 5 097 253
- US-A- 6 002 343

## Beschreibung

Die vorliegende Erfindung betrifft eine Siegeleinrichtung mit einem Siegelkörper und einer Befestigungseinrichtung zur verliersicheren Befestigung des Siegelkörpers an einem Siegelobjekt, wobei die Befestigungseinrichtung an ihrem einen Ende einstückig mit dem Siegelkörper verbunden ist und an ihrem weiteren Ende mit einer Verbindungseinrichtung zur kraftschlüssigen Verbindung mit einer am Siegelkörper ausgebildeten Anschlusseinrichtung versehen ist.

Siegeleinrichtungen der eingangs genannten Art sind hinlänglich bekannt und werden oftmals auch als "Plomben" bezeichnet. Bei derartigen Plomben ist die Verbindungseinrichtung zur kraftschlüssigen Verbindung der Befestigungseinrichtung mit dem Siegelkörper regelmäßig als nicht lösbare Rastverbindung ausgebildet, die zwar ein leichtes Verrasten der Verbindungseinrichtung mit einer komplementär am Siegelkötper ausgebildeten Anschlusseinrichtung ermöglicht, jedoch ein zerstörungsfreies Lösen dieser Verbindung unmöglich macht. Hierdurch ermöglichen die bekannten Plomben eine visuelle Überprüfung der Unversehrtheit der Plombe.

Insbesondere bei der Überprüfung einer großen Anzahl von mit konventionellen Plomben gesicherten Siegelobjekten erweist sich die zur Überprüfung der Unversehrtheit der Plomben notwendige Inaugenscheinnahme jeder einzelnen Plombe als sehr aufwendig. Darüber hinaus sind je nach Bauart konventioneller Plomben Manipulationen an einer aufgebrochenen Plombe, die die Unversehrtheit der Plombe vortäuschen sollen, nicht völlig ausgeschlossen, sondern häufig nur eine Frage des im Zusammenhang mit der Vornahme der Manipulation betriebenen Aufwands.

Aus der US 6 002 343 A geht eine Siegeleinrichtung mit einem Siegelkörper mit darin enthaltener Elektronik hervor, an der ein Widerstandselement angeschlossen ist, dessen Zerstörung durch die Elektronik des Schlüsselkörpers festgestellt werden kann. Hierbei besteht das Widerstandselement aus einer zufälligen Anzahl von Widerstandsdrähten, sodass das Widerstandselement einen statistisch zufälligen Widerstandswert besitzt.

Die EP-A-0 978 812 A2 beschreibt eine Siegeleinrichtung, die ein Gehäuse, einen Alarmschaltkreis zur Erzeugung eines Alarmsignals und einen Alarmdraht aufweist. Der Siegelkörper kann durch Verschlusselemente den Alarmdraht selektiv an das Gehäuse anschließen. Mit Hilfe eines externen Schalters können die Verschlusselemente geöffnet werden, um den Draht vom Gehäuse zu lösen.

Beiden Druckschriften ist gemeinsam, dass die darin offenbarten Siegeleinrichtungen eine interne Spannungsversorgungseinrichtung umfassen müssen, so dass eine Abhängigkeit von einer Energiequelle vorhanden ist und eine begrenzte Funktionsdauer zu erwarten ist.

Der vorliegenden Erfindung liegt die Aufgabe zugrunde, eine Siegeleinrichtung vorzuschlagen, die einerseits eine leichtere Überprüfung der Unversehrtheit der Siegeleinrichtung ermöglicht und andererseits sich durch eine vergrößerte Sicherheit gegen Manipulationen auszeichnet. Diese Aufgabe wird durch eine Siegeleinrichtung mit den Merkmalen des Anspruchs 1 gelöst.

Bei der erfindungsgemäßen Siegeleinrichtung ist der Siegelkörper mit einem als Schaltkreis ausgeführten Datenträger mit Datenübertragungseinrichtung versehen, wobei der Datenträger eine externe Schaltungsbrücke aufweist, die zur Verbindung von zwei Anschlussstellen des Schaltkreises durch die Befestigungseinrichtung verläuft.

Infolge der Herstellung der kraftschlüssigen Verbindung zwischen der Verbindungseinrichtung der Befestigungseinrichtung und der am Siegelkörper ausgebildeten Anschlusseinrichtung wird ein elektrischer Kontakt zwischen den Anschlussstellen des Schaltkreises geschlossen. Die Aufhebung des elektrischen Kontakts führt somit zu einer Unterbrechung einer Kontaktbrücke des Schaltkreises und zur Erzeugung einer Datenänderung auf dem Datenträger, die über die Datenübertragungseinrichtung von außen ablesbar ist. Je nach Ausbildung des Schaltkreises kann die Datenänderung temporärer Natur sein, also lediglich während der Unterbrechung der Kontaktbrücke existent sein, oder permanenter Natur, derart, dass die aufgrund der Unterbrechung der Kontaktbrücke erfolgte Datenänderung auch nach Wiederherstellung des Kontakts erhalten bleibt, also der Schaltkreis einen "memory-effect" aufweist. Insbesondere im letzteren Fall ist somit die Möglichkeit gegeben, dass selbst nach Durchführung einer Manipulation an der Siegeleinrichtung und der Wiederherstellung der externen Schaltungsbrücke die Manipulation bei einem Datenzugriff auf den Datenträger über die Datenübertragungseinrichtung dokumentiert ist. Damit ist die erfindungsgemäße Siegeleinrichtung praktisch fälschungssicher.

Erfindungsgemäß ist der Schaltkreis mit einer in der Siegeleinrichtung angeordneten Antenneneinrichtung versehen, die sowohl als Datenübertragungseinrichtung als auch zur Verbindung mit einer externen Energieversorgungseinrichtung dient. Hierdurch wird ein berührungsloser Datenzugriff auf die Daten des Datenträgers möglich, wobei zusätzlich aufgrund der nicht benötigten internen Energieversorgungseinrichtung ein besonders hoher Grad der Miniaturisierung und damit eine entsprechend kleine und darüber hinaus leichte Ausbildung des Siegelkörpers möglich wird.

Gemäß einer vorteilhaften Ausführungsform ist der Schaltkreis als integrierter Schaltkreis, vorzugsweise als Chip, ausgeführt. Die Ausführung des Schaltkreises als Chip ermöglicht eine besonders einfache Integration des Schaltkreises in den Siegelkörper, beispielsweise durch einen als Siegelkörper ausgebildeten Verguss des Chips bzw. eines den Chip aufnehmenden Chipmoduls.

Eine vorteilhafte Ausführung der Schaltungsbrücke als drahtförmiger Leiter ermöglicht eine Ausgestaltung der Schaltungsbrücke, die in besonderer Weise die Funktion der die Schaltungsbrücke aufnehmenden Befestigungseinrichtung zur Umbefestigung an einem Siegelobjekt berücksichtigt. Dabei ist der Begriff "drahtförmig" nicht als Hinweis auf die Ausbildung der Schaltungsbrücke nach Art eines konventionellen Drahtes zu verstehen, vielmehr soll der Begriff "drahtförmig" eine langgestreckte, gerichtete Ausführung des elektrischen Leiters nach Art eines Drahtes implizieren. So kann die Schaltungsbrücke einerseits tatsächlich als ein durch eine Isolation ummantelter Draht gestaltet sein. Andererseits ist es beispielsweise auch möglich, eine aus Kunststoff gebildete Befestigungseinrichtung zumindest im Bereich einer durchgehenden Faser mit leitfähigen Partikeln zu versetzen, um einen elektrischen Leiter zu realisieren.

In einer besonders einfach aufgebauten Ausführungsform der Siegeleinrichtung ist die Schaltungsbrücke in Reihe mit der Antenneneinrichtung geschaltet. Bei dieser Ausführungsform ist ein externer Datenzugriff über die als Antenneneinrichtung ausgebildete Datenübertragungseinrichtung nach Durchtrennung der Schaltungsbrücke infolge eines Siegelbruchs nicht mehr möglich, so dass die Anzeige eines Siegelbruchs durch den Wegfall des Antennensignals angezeigt wird.

Bei der vorgenannten Ausführungsform kann in besonders vorteilhafter Weise die Schaltungsbrücke selbst als Teil der Antenneneinrichtung wirken, so dass die Schaltungsbrücke quasi einen Windungsabschnitt der Antenneneinrichtung bildet.

Bei einer weiteren Ausführungsform der Siegeleinrichtung ist die Schaltungsbrücke parallel mit der Antenneneinrichtung geschaltet, so dass auch nach erfolgter Durchtrennung der Schaltungsbrücke ein Antennensignal gegeben ist und somit unabhängig vom Zustand der Siegeleinrichtung eine Datenübertragung erfolgen kann.

Weiterhin ist auch eine Ausführung der Siegeleinrichtung möglich, derart, dass die Schaltungsbrücke in Reihe mit einer zweiten Antenneneinrichtung geschaltet ist, so dass ein Durchtrennen der Schaltungsbrücke unmittelbar Auswirkung hat auf die Reichweite des Antennensignals. Auch bei der vorgenannten Ausführungsform ist es möglich, die Schaltungsbrücke als Teil einer Antenneneinrichtung, also aus einem Windungsabschnitt der Antenneneinrichtung bestehend, auszubilden.

Zur einfachen, ohne die Notwendigkeit der Verwendung von Werkzeugen herstellbaren, elektrisch sicheren Kontakteinrichtung zwischen der Verbindungseinrichtung am Ende der Befestigungseinrichtung und der Anschlusseinrichtung am Siegelkörper ist es vorteilhaft, die Kontakteinrichtung als Rastverbindungseinrichtung auszubilden.

Um parallel zur Überprüfung der Unversehrtheit des Siegels basierend auf einem elektrischen Signal auch eine visuelle Überprüfung der Unversehrtheit zu ermöglichen, ist es vorteilhaft, die Kontakteinrichtung unabhängig von der Art und Weise ihrer Ausbildung als nicht lösbare Verbindung auszuführen.

Um eine unerwünschte Wiederherstellung der Siegelfunktion durch eine Wiederherstellung der Kontakteinrichtung zwischen der Verbindungseinrichtung der Befestigungseinrichtung und der Anschlusseinrichtung des Siegelkörpers verhindern zu können, ist es besonders vorteilhaft, wenn die Verbindungseinrichtung und/oder die Anschlusseinrichtung einen Deformationsteil aufweisen, der bei einer Trennung der Kontakteinrichtung so deformiert, dass die Wiederherstellung der kraftschlüssigen Verbindung zwischen der Verbindungseinrichtung der Befestigungseinrichtung und der Anschlusseinrichtung des Siegelkörpers nicht möglich ist.

Wenn die Befestigungseinrichtung als Drahtleiter ausgebildet ist, ist ein besonders einfacher Aufbau der Befestigungseinrichtung möglich, da der Drahtleiter sowohl als elektrische Schaltungsbrücke als auch als mechanisches Befestigungselement zur Befestigung des Siegelkörpers am Siegelobjekt dient.

Eine besonders einfache Ausgestaltung der gesamten Siegeleinrichtung wird möglich, wenn die Befestigungseinrichtung aus einem einstückigen Fortsatz des Siegelkörpers gebildet ist, da somit die Herstellung der Befestigungseinrichtung und des Siegelkörpers in einem gemeinsamen Formungsvorgang erfolgen kann.

Wenn die Befestigungseinrichtung eine aus leitfähigem Kunststoff gebildete Schaltungsbrücke aufweist, kann die Ausbildung der Befestigungseinrichtung einstückig mit dem Siegelkörper durch einen Zusatz von leitfähigen Partikeln in die zur Herstellung der Befestigungseinrichtung vorgesehene Kunststoffmasse erfolgen.

Einen besonderen Schutz gegen eine Wiederherstellung der elektrischen Leiterfunktion nach Durchtrennung der Schaltungsbrücke erzielt man, wenn die Befestigungseinrichtung zur Ausbildung der Schaltungsbrücke eine Mehrzahl von elektrisch leitfähigen Fasern aufweist, so dass eine Wiederherstellung sämtlicher Faserverbindungen nach Durchtrennung der Befestigungseinrichtung praktisch unmöglich gemacht wird.

Des weiteren ist zusätzlich denkbar, dass der Schaltkreis an eine in die Siegeleinrichtung integrierte Energieversorgungseinrichtung angeschlossen werden kann, und die Datenübertragungseinrichtung aus einer außen am Siegelkörper angeordneten Datenzugriffskontaktanordnung ausgebildet sein kann. Mit dieser Möglichkeit ist ein kontaktbehafteter Datenzugriff auf die Daten des Datenträgers von außen gegeben, ohne dass eine externe Energieversorgung des Schaltkreises für den Datenexport in eine Leseeinrichtung notwendig wäre.

Nachfolgend werden bevorzugte Ausführungsformen der Siegeleinrichtung anhand der Zeichnung näher erläutert.

Es zeigen:
- **Fig. 1**: eine Siegeleinrichtung eines Ausführungsbeispiels mit ei- ner an einem Siegelkörper angeordneten Befestigungsein- richtung und geöffneter Kontakteinrichtung;
- **Fig. 2**: die in **Fig. 1** dargestellte Siegeleinrichtung mit geschlos- sener Kontakteinrichtung;
- **Fig. 3**: eine Siegeleinrichtung in einer weiteren Ausführungsform mit geschlossener Kontakteinrichtung;
- **Fig. 4**: eine am freien Ende einer Befestigungseinrichtung ausge- bildete Verbindungseinrichtung;
- **Fig. 5**: eine Verbindungseinrichtung beim Einführen in eine am Siegelkörper ausgebildete Anschlusseinrichtung zur Aus- bildung einer geschlossenen Kontakteinrichtung;
- **Fig. 6**: die geschlossene Kontakteinrichtung;
- **Fig. 7**: eine Siegeleinrichtung zur Veranschaulichung der techni- schen Lehre in schematischer Darstellung mit einem Chip- modul zur Ausbildung eines Datenträgers und einer auf dem Chipmodul angeordneten Außenkontakteinrichtung als Datenübertragungseinrichtung;
- **Fig. 8**: eine weitere Siegeleinrichtung eines Ausführungsbeispiels in schematischer Darstellung mit einem Chipmodul als Datenträger und einer Antenneneinrichtung als Datenüber- tragungseinrichtung;
- **Fig. 9**: eine Siegeleinrichtung in einer weiteren Ausführungsform mit einem Chipmodul als Datenträger und einer Antennen- einrichtung als Datenübertragungseinrichtung;
- **Fig. 10**: eine weitere Siegeleinrichtung eines Ausführungsbeispiels in schematischer Darstellung mit einem Chipmodul als Datenträger und einer Antenneneinrichtung als Datenüber- tragungseinrichtung.

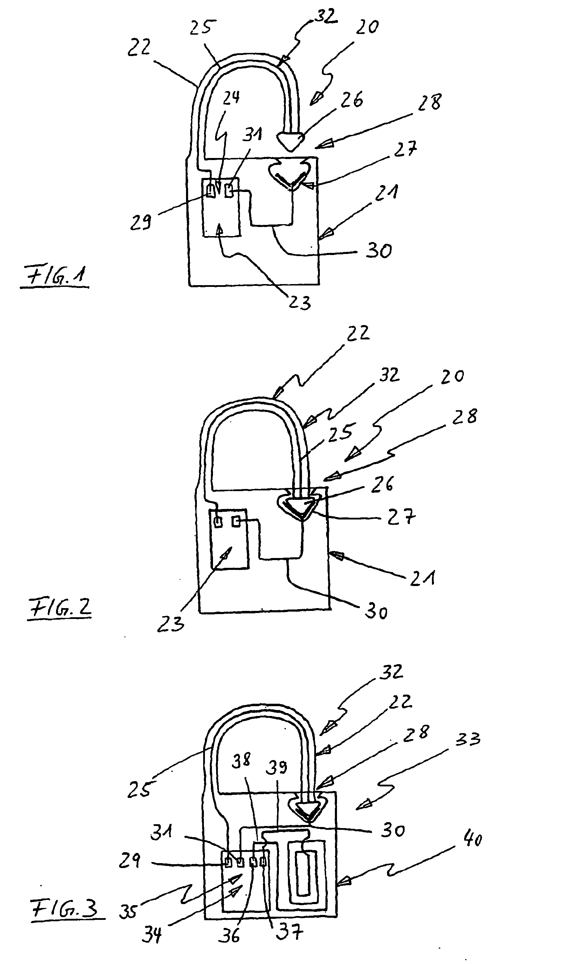

**Fig. 1** zeigt eine Siegeleinrichtung 20 mit einem Siegelkörper 21 und einer Befestigungseinrichtung 22. Die Siegeleinrichtung 20 weist in der dargestellten einfachen Ausführungsform als elektrische Bauelemente ein im Siegelkörper 21 angeordnetes Chipmodul 23 mit einem hier nicht näher dargestellten Chip und einer Kontaktflächenanordnung 24, einen zur Ausbildung einer Schaltungsbrücke in der mit einem Ende 25 einstückig mit dem Siegelkörper 21 verbundenen Befestigungseinrichtung 22 angeordneten Drahtleiter 25 sowie einer Kontakteinrichtung 28, die aus einer Verbindungseinrichtung 26 am freien Ende der Befestigungseinrichtung 22 und einer im Siegelkörper 21 angeordneten Anschlusseinrichtung 27 zusammengesetzt ist. Der Drahtleiter 25 ist mit einer ersten Kontaktfläche 29 der Kontaktflächenanordnung 24 verbunden. Zur elektrischen Verbindung der Anschlusseinrichtung 27 mit dem Chipmodul 23 ist die Anschlusseinrichtung 27 über einen weiteren Drahtleiter 30 mit einer weiteren Kontaktfläche 31 der Kontaktflächenanordnung 24 des Chipmoduls 23 kontaktiert.

**Fig. 2** zeigt die Siegeleinrichtung 20 mit geschlossener Kontakteinrichtung 28, wobei die am Ende der Befestigungseinrichtung 22 bzw. des Drahtleiters 25 ausgebildete elektrisch leitfähige Verbindungseinrichtung 26 in die Anschlusseinrichtung 27 eingeführt ist. In dieser Konfiguration dient der Drahtleiter 25 zusammen mit dem über die Kontakteinrichtung 28 elektrisch angeschlossenen Drahtleiter 30 als eine Antenneneinrichtung 32, die neben der Ausbildung einer die Kontaktflächen 29 und 31 der Kontaktflächenanordnung 24 miteinander verbindenden Schaltungsbrücke eine Datenübertragungseinrichtung zur kontaktfreien Verbindung eines hier nicht näher dargestellten Lesegerätes mit dem durch den hier nicht näher dargestellten Chip des Chipmoduls 23 gebildeten Datenträger bildet. Zudem ermöglicht die Antenneneinrichtung 32 die für den Auslesevorgang notwendige Energieversorgung. Ein Schaltungsaufbau der vorstehend genannten Art, umfassend ein Chipmodul 23 und eine mit dem Chipmodul 23 kontaktierte Antenneneinrichtung 32, wird allgemein auch als Transponder bezeichnet.

**Fig. 3** zeigt gemäß einer weiteren Ausführungsform eine Siegeleinrichtung 33, die abweichend von der in den **Fig. 1** und **2** dargestellten Siegelcinrichtung 20 ein Chipmodul 34 aufweist, das mit einer Kontaktflächenanordnung 35 versehen ist. Die Kontaktflächenanordnung 35 umfasst neben den Kontaktflächen 29, 31, die, wie vorstehend unter Bezugnahme auf die **Fig. 1** und **2** bereits ausgeführt, mit den Drahtleitern 25 bzw. 30 kontaktiert sind, weitere Kontaktflächen 36, 37, die mit Kontaktenden 38, 39 einer weiteren Antenneneinrichtung 40 kontaktiert sind. Somit weist die in **Fig. 3** dargestellte Siegeleinrichtung 33 bei geschlossener Kontakteinrichtung 28 zwei Antenneneinrichtungen 32 und 40 auf, wobei die Funktion der Antenneneinrichtung 40 unabhängig davon ist, ob die Kontakteinrichtung 28 geöffnet oder geschlossen ist. Darüber hinaus ist die Funktion der Antenneneinrichtung 40 unabhängig davon, ob die durch den Drahtleiter 25 in der Befestigungseinrichtung 22 gebildete Schaltungsbrücke geschlossen oder durchtrennt ist.

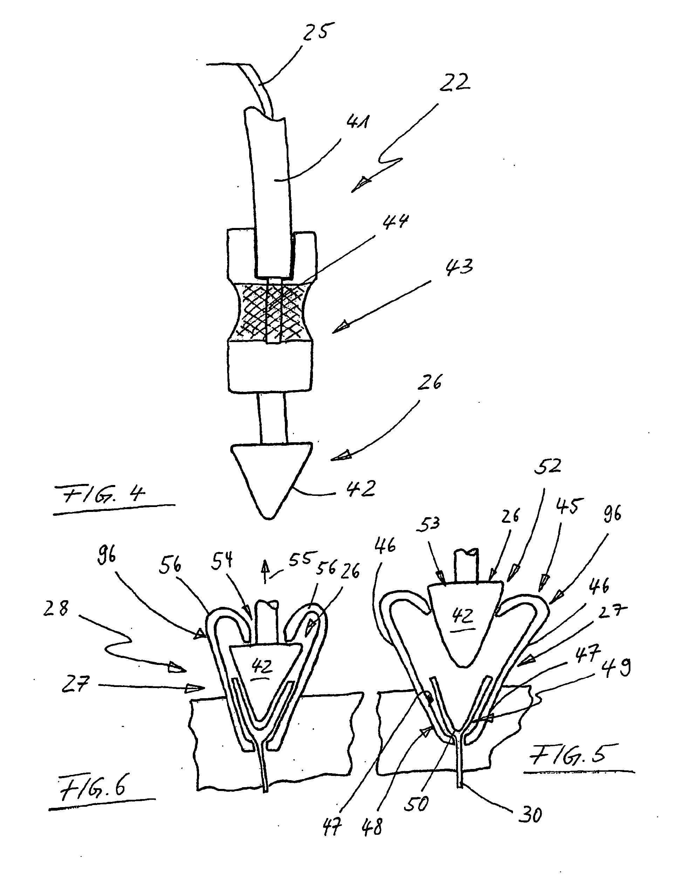

**Fig. 4** zeigt in einer vergrößerten Darstellung das freie Ende der in den **Fig. 1** bis **3** dargestellten Befestigungseinrichtung 22 mit der zur Einführung in die ebenfalls in den **Fig. 1** bis **3** dargestellte Anschlusseinrichtung 27 bestimmten Verbindungseinrichtung 26. Bei dem in **Fig. 4** dargestellten Ausführungsbeispiel weist die Befestigungseinrichtung 22 den von einer einstückig an den Siegelkörper 21 **(****Fig. 1** bis **2****)** angegossenen isolierenden Kunststoffummantclung 41 umgebenen Drahtleiter 25 auf. Die Verbindungseinrichtung 26 besteht im vorliegenden Fall aus einem Einführkegel 42, der über eine Quetschverbindung 43 an ein Anschlussende 44 des Drahtleiters 25 angeschlossen ist,

Die **Fig. 5** und **6** zeigen den Einführvorgang zur Herstellung der aus der Verbindungseinrichtung 26 und der Anschlusseinrichtung 27 gebildeten Kontakteinrichtung 28 **(****Fig. 5****)** sowie die fertiggestellte Kontakteinrichtung 28 **(****Fig. 6****).** Wie **Fig. 5** zeigt, besteht die fest im Siegelkörper 21 beispielsweise durch Verklebung zumindest teilweise eingeschlossene Anschlusseinrichtung 27 aus einem formelastischen, V-förmigen, beispielsweise aus Kunststoff gefertigten Anschlussgehäuse 51. Das Anschlussgehäuse 51 weist zwei V-förmig zueinander angestellte und an ihrem freien Ende mit Rastbügeln 45 versehene Spreizschenkel 46 auf. In einem durch miteinander verbundene Basisenden 47 der Spreizschenkel 46 gebildeten Gehäusegrund 48 ist ein formkomplementär zum Einführkegel 42 ausgebildeter Kegelkontakt 49 angeordnet, der mit seiner Kontaktspitze 50 an den Drahtleiter 30 angeschlossen ist.

Wie in **Fig. 5** dargestellt, wird durch ein Einführen des Einführkegels 42 der Verbindungseinrichtung 26 in einen zwischen den Rastbügeln 45 des Anschlussgehäuses 51 ausgebildeten Einführspalt 52 ein Aufspreizen der Spreizschenkel 46 bewirkt. Bei Fortsetzung der Einführbewegung tritt der Einführkegel 42 in den Kegelkontakt 49 ein, und die am Ende der Spreizschenkel 46 ausgebildeten Rastbügel 45 umgreifen aufgrund der formelastischen Rückstellkräfte der Spreizschenkel 46 den Einführkegel 42 an seinem rückwärtigen Rastende 53.

Wie aus der Darstellung der geschlossenen Kontakteinrichtung 28 in **Fig. 6** deutlich wird, ist ein nach dem Einführvorgang zwischen einem Schaft 54 des Einführkegels 42 und den Rasfbügeln 45 gebildeter Ringraum 34 so bemessen, dass ein Entfernen des Einführkegels 42 aus dem Anschlussgehäuse 51 nach erfolgter Verrastung nicht möglich ist. Vielmehr bewirkt eine auf den Einführkegel 42 ausgeübte Trennkraft 55, dass die Rastbügel 45 mit ihren freien Enden zur Anlage gegen den Schaft 54 bewegt werden und so ein Herausziehen des Einführkegels 42 aus der Anschlusseinrichtung 27 nicht möglich ist. Wenn die Trennkraft 55 ein bestimmtes Maß übersteigt, kommt es im Bereich von durch Anschlussbögen 56 der Rastbügel 45 definierten Sollbruchstellen zum Bauteilversagen und damit zum Lösen der Verbindung. Aufgrund des Bauteilversagens ist eine Wiederherstellung der Kontakteinrichtung 28 nicht möglich.

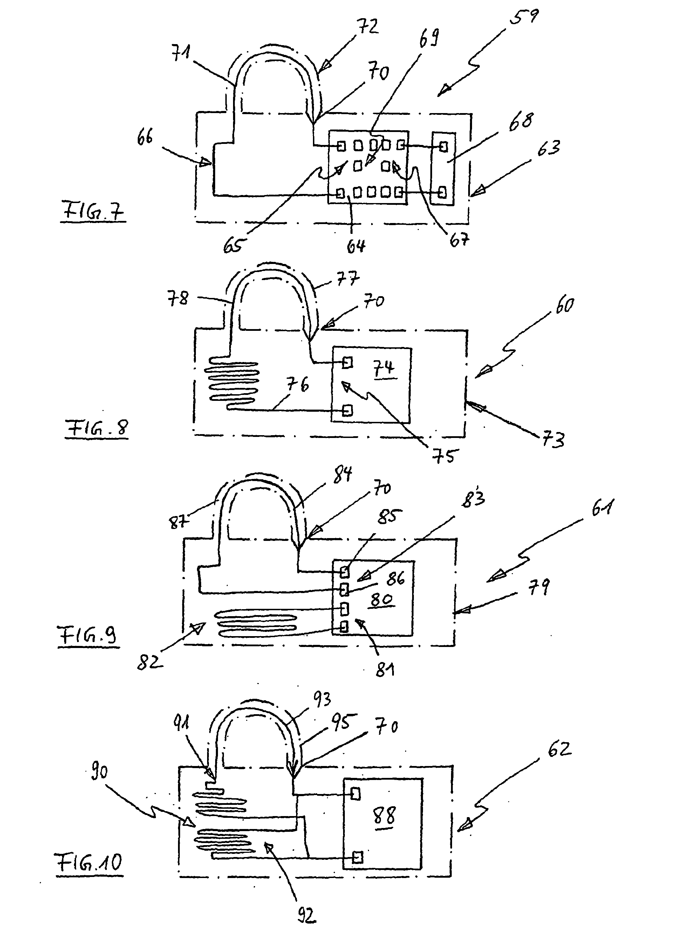

In den **Fig. 8** bis **10** sind in schematischer Darstellung weitere Ausführungsformen von Siegeleinrichtungen 60, 61 und 62 dargestellt. Die in **Fig. 7** dargestellte Siegeleinrichtung 59 dient einer technischen Veranschaulichung und weist in einem Siegelkörper 63 angeordnet ein Chipmodul 64 auf, das über eine erste Anschlussflächenanordnung 65 mit einer Verbindungsleitereinrichtung 66 und über eine zweiten Anschlussflächenanordnung 67 mit einer als Batterie ausgebildeten internen Energieversorgungseinrichtung 68 kontaktiert ist. Für den Datenzugriff auf den hier nicht näher dargestellten, im Chipmodul 64 angeordneten Chip ist das Chipmodul 64 mit einer in der Oberfläche des Siegelkörpers 63 angeordneten, von außen zugänglichen Datenzugriffskontaktanordnung 69 versehen. Die Verbindungsleitereinrichtung 66 ist mit einer durch eine Kontakteinrichtung 70 geschlossenen Schaltungsbrücke 71 verbunden, die im Wesentlichen in einer am Siegelkörper 63 ausgebildeten Befestigungseinrichtung 72 angeordnet ist.

**Fig. 8** zeigt als Ausführungsbeispiel die Siegeleinrichtung 60, die im Siegelkörper 73 angeordnet ein Chipmodul 74 aufweist, das über eine Anschlussflächenanordnung 75 mit einer Antenneneinrichtung 76 kontaktiert ist. Die Antenneneinrichtung 76 ist ebenfalls im Siegelkörper 73 angeordnet und ermöglicht einerseits einen Datenzugriff auf die in dem hier nicht näher dargestellten Chip des Chipmoduls 74 gespeicherten Daten und andererseits die Energieversorgung des Chips von außerhalb des Siegelkörpers 73. Mit der Antenneneinrichtung 76 verbunden ist eine im Wesentlichen durch eine Befestigungseinrichtung 77 verlaufende Schaltungsbrücke 78 angeschlossen, die bei geschlossener Kontakteinrichtung 70 in eine Antennenwindung der Antenneneinrichtung 76 integriert ist und bei geeigneter Ausgestaltung so die Reichweite der Antenneneinrichtung 76 erhöhen kann.

Das in **Fig. 9** dargestellte Ausführungsbeispiel einer Siegeleinrichtung 61 weist ein in einem Siegelkörper 79 angeordnetes Chipmodul 80 auf, das über eine erste Anschlussflächenanordnung 81 mit einer Antenneneinrichtung 82 und über eine zweite Anschlussflächenanordnung 83 mit einer Schaltungsbrücke 84 verbunden ist, die bei geschlossener Kontakteinrichtung 70 Anschlussflächen 85 und 86 der Anschlussflächenanordnung 83 miteinander kurzschließt.

Bei der in **Fig. 9** dargestellten Siegeleinrichtung 61 ist sowohl die Datenzugriffsfunktion über eine extern angeordnete, hier nicht näher dargestellte und mit der Antenneneinrichtung 82 kommunizierende Leseeinrichtung als auch die Energieversorgungsfunktion der Antenneneinrichtung 82 unabhängig von der Kontakteinrichtung 70 oder der Unversehrtheit der durch eine Befestigungseinrichtung 87 der Siegeleinrichtung 61 hindurch verlaufenden Schaltungsbrücke 84. Hierdurch ist es möglich, auch dann noch Daten von dem Chip des Chipmoduls 80, die beispielsweise Produktinformationen oder Lieferdaten des mit der Siegeleinrichtung versehenen Objekts umfassen können, zu lesen, wenn die Schaltungsbrücke 84 aufgrund einer Durchtrennung oder einer geöffneten Kontakteinrichtung 70 nicht geschlossen ist.

Das in **Fig. 10** dargestellte Ausführungsbeispiel einer Siegeleinrichtung 62 weist einen Chipmodul 88 auf, der über eine Anschlussflächenanordnung 89 mit einer zweiteiligen Antenneneinrichtung 90 kontaktiert ist, die schaltungstechnisch aus zwei parallel geschalteten Antenneneinheiten 91 und 92 zusammengesetzt ist. Die Antenneneinheit 91 weist an einer Antennenwindung angeschlossen eine Schaltungsbrücke 93 auf, die im Wesentlichen durch eine mit dem Siegelkörper 94 verbundene Befestigungseinrichtung 95 verläuft. Bei geschlossener Kontakteinrichtung 70 ist somit die Antenneneinheit 91 neben der Antenneneinheit 92 in Funktion. Bei geöffneter Kontakteinrichtung 70 oder gewaltsam durchtrennter Schaltungsbrücke 93 ist lediglich die Antenneneinheit 92 in Funktion. Hierdurch zeigt eine Reduzierung der Signalstärke des Antennensignals bzw. eine Reduzierung der Reichweite der Antenneneinrichtung 90 an, dass entweder die Kontakteinrichtung 70 nicht geschlossen oder die Schaltungsbrücke 93 durchtrennt ist. Auch bei durchtrennter Schaltungsbrücke 93 ist jedoch bei dem in **Fig. 10** dargestellten Ausführungsbeispiel ein berührungsloser Datenzugriff auf das Chipmodul 88 über die Antenneneinheit 92 bei entsprechend verringertem Abstand zwischen der Siegeleinrichtung 62 und einer hier nicht näher dargestellten Leseeinrichtung möglich.

## Patentansprüche

1. Siegeleinrichtung mit einem Siegelkörper und einer Befestigungseinrichtung zur verliersicheren Befestigung des Siegelkörpers an einem Siegelobjekt, wobei die Befestigungseinrichtung an ihrem einen Ende einstückig mit dem Siegelkörper verbunden ist und an ihrem weiteren Ende mit einer Verbindungseinrichtung zur kraftschlüssigen Verbindung mit einer am Siegelkörper ausgebildeten Anschlusseinrichtung versehen ist, der Siegelkörper (21, 73, 79, 94) mit einem als Schaltkreis (34, 74, 80, 88) ausgeführten Datenträger mit Datenübertragungseinrichtung (32, 40, 82, 90) versehen ist, und der Schaltkreis eine externe Schaltungsbrücke (25, 78, 84, 93) aufweist, die zur Verbindung von zwei Anschlussstellen (29, 30, 31, 75, 83) des Schaltkreises durch die Befestigungseinrichtung (22, 77, 87, 95) verläuft, **dadurch gekennzeichnet,**
**dass** der Schaltkreis (34, 74, 80, 88) mit einer in der Siegeleinrichtung (33, 60, 61, 62) angeordneten Antenneneinrichtung (32, 40, 82, 90) verstehen ist, die sowohl als Datenübertragungseinrichtung als auch zur Verbindung mit einer externen Energieversorgungseinrichtung dient.

2. Siegeleinrichtung nach Anspruch 1,
**dadurch gekennzeichnet ,**
**dass** der Schaltkreis als integrierter Schaltkreis (34, 74, 80, 88) und die Schaltungsbrücke (25, 78, 84, 93) vorzugsweise als drahtförmiger Leiter ausgebildet sind.

3. Siegeleinrichtung nach einem der vorangegangenen Ansprüche,
**dadurch gekennzeichnet ,**
**dass** die Schaltungsbrücke (78) in Reihe mit der Antenneneinrichtung (76) geschaltet ist.

4. Siegeleinrichtung nach Anspruch 3,
**dadurch gekennzeichnet,**
**dass** die Schaltungsbrücke (78) aus einem Windungsabschnitt der Antenneneinrichtung (76) gebildet ist.

5. Siegeleinrichtung nach einem der vorangegangenen Ansprüche,
**dadurch gekennzeichnet,**
**dass** die Schaltungsbrücke (84) parallel mit der Antenneneinrichtung (82) geschaltet ist.

6. Siegeleinrichtung nach Anspruch 5,
**dadurch gekennzeichnet,**
**dass** die Schaltungsbrücke (93) in Reihe mit einer zweiten Antenneneinrichtung (91) geschaltet ist.

7. Siegeleinrichtung nach Anspruch 6,
**dadurch gekennzeichnet,**
**dass** die Schaltungsbrücke (93) aus einem Windungsabschnitt der zweiten Antenneneinrichtung (91) gebildet ist.

8. Siegeleinrichtung nach einem der vorangehenden Ansprüche,
**dadurch gekennzeichnet,**
**dass** die Verbindungseinrichtung (26) an der Befestigungseinrichtung (22, 77, 87, 95) und die Anschlusseinrichtung (27) am Siegelkörper (21, 73, 79, 94) eine als Rastverbindungseinrichtung ausgebildete Kontakteinrichtung (28) bilden.

9. Siegeleinrichtung nach einem der vorangehenden Ansprüche,
**dadurch gekennzeichnet,**
**dass** die Kontakteinrichtung als nicht lösbare Verbindung ausgeführt ist.

10. Siegeleinrichtung nach Anspruch 8,
**dadurch gekennzeichnet,**
**dass** die Kontakteinrichtung (28, 70) als Einmal-Verbindungseinrichtung ansgeführt ist.

11. Siegeleinrichtung nach Anspruch 10,
**dadurch gekennzeichnet,**
**dass** die Verbindungseinrichtung und/oder die Anschlusseinrichtung einen Deformationsteil aufweisen.

12. Siegeleinrichtung nach einem der vorangehenden Ansprüche,
**dadurch gekennzeichnet,**
**dass** die Befestigungseinrichtung (22) als Drahtleiter ausgebildet ist.

13. Siegeleinrichtung nach einem der Ansprüche 1 bis 11,
**dadurch gekennzeichnet,**
**dass** die Befestigungseinrichtung (77, 87, 95) aus einem einstückigen Fortsatz des Siegelkörpers gebildet ist.

14. Siegeleinrichtung nach Anspruch 13,
**dadurch gekennzeichnet ,**
**dass** die Befestigungseinrichtung (77, 87, 95) eine aus leitfähigem Kunststoff gebildete Schaltungsbrücke (25, 78, 84, 93) aufweist.

15. Siegeleinrichtung nach einem der Ansprüche 12 bis 14,
**dadurch gekennzeichnet,**
**dass** die Befestigungseinrichtung (77, 87, 95) zur Ausbildung der Schaltungsbrücke (25, 78, 84, 93) eine Mehrzahl von elektrisch leitfähigen Fasern aufweist.

## Claims

1. A seal device with a seal body and an attachment device for the captive attachment of the seal body to an object to be sealed, wherein one end of the attachment device is connected in a single piece with the seal body while on its other end it comprises a joining device for non-positive joining to a connection device that is provided on the seal body, the seal body (21, 73, 79, 94) comprising a data carrier that comprises a data transmission device (32, 40, 82, 90), which data carrier is designed as a switching circuit (34, 74, 80, 88), wherein the switching circuit comprises an external circuit bridge (25, 78, 84, 93) which for the purpose of connecting two connection points (29, 30, 31, 75, 83) of the switching circuit leads through the attachment device (22, 77, 87, 95),
**characterized in that**
the switching circuit (34, 74, 80, 88) comprises an antenna device (32, 40, 82, 90) that is arranged in the seal device (33, 60, 61, 62), which antenna device (32, 40, 82, 90) is used both as a data transmission device and as a connection to an external energy supply device.

2. The seal device according to claim 1,
**characterized in that**
the switching circuit is an integrated circuit (34, 74, 80, 88), and the circuit bridge (25, 78, 84, 93) is preferably a wire-shaped conductor.

3. The seal device according to any one of the preceding claims, **characterized in that**
the circuit bridge (78) is connected in series with the antenna device (76).

4. The seal device according to claim 3,
**characterized in that**
the circuit bridge (78) is formed from a section of the winding of the antenna device (76).

5. The seal device according to any one of the preceding claims,
**characterized in that**
the circuit bridge (84) is parallel connected to the antenna device (82).

6. The seal device according to claim 5,
**characterized in that**
the circuit bridge (93) is connected in series with a second antenna device (91).

7. The seal device according to claim 6,
**characterized in that**
the circuit bridge (93) is formed from a section of the winding of the second antenna device (91).

8. The seal device according to any one of the preceding claims,
**characterized in that**
the joining device (26) on the attachment device (22, 77, 87, 95) and the connection device (27) on the seal body (21, 73, 79, 94) form a contact device (28) designed as a snap-in connection device.

9. The seal device according to any one of the preceding claims,
**characterized in that**
the contact device is constructed as a non-separable connection.

10. The seal device according to claim 8,
**characterized in that**
the contact device (28, 70) is a one-time joining device.

11. The seal device according to claim 10,
**characterized in that**
the joining device and/or the connection device comprise(s) a deformation part.

12. The seal device according to any one of the preceding claims,
**characterized in that**
the attachment device (22) is constructed as a wire conductor.

13. The seal device according to any one of claims 1 to 11,
**characterized in that**
the attachment device (77, 87, 95) is made from a single-piece extension of the seal body.

14. The seal device according to claim 13,
**characterized in that**
the attachment device (77, 87, 95) comprises a circuit bridge (25, 78, 84, 93) that is formed from a conductive plastic.

15. The seal device according to any one of claims 12 to 14,
**characterized in that**
in order to form the circuit bridge (25, 78, 84, 93) the attachment device (77, 87, 95) comprises a multitude of electrically conductive fibres.

## Revendications

1. Dispositif de scellage avec un corps de scellage et un dispositif de fixation pour la fixation du corps de scellage à un objet à sceller de manière imperdable, le dispositif de fixation à l'une de ses extrémités étant relié d'un seul tenant au corps de scellage, et à l'autre extrémité étant muni d'un dispositif de liaison afin d'établir une liaison par adhérence avec un dispositif de connexion formé au corps de scellage, le corps de scellage (21, 73, 79, 94) étant pourvu d'un support de données qui est réalisé en forme d'un circuit (34, 74, 80, 88) et qui comprend un dispositif de transmission de données (32, 40, 82, 90), et le circuit présentant un pont de circuit externe (25, 78, 84, 93) qui s'étend à travers le dispositif de fixation (22, 77, 87, 95) afin de relier deux points de connexion (29, 30, 31, 75, 83) du circuit,
**caractérisé en ce que**
le circuit (34, 74, 80, 88) est muni d'un dispositif d'antenne (32, 40, 82, 90) qui est disposé dans le dispositif de scellage (33, 60, 61, 62), et qui sert non seulement de dispositif de transmission de données mais encore pour la connexion avec un dispositif d'alimentation en énergie externe.

2. Dispositif de scellage selon la revendication 1,
**caractérisé en ce que**
le circuit est façonné en forme d'un circuit intégré (34, 74, 80, 88) et le pont de circuit (25, 78, 84, 93) est réalisé de préférence en forme d'un conducteur conçu sous la forme d'un fil métallique.

3. Dispositif de scellage selon l'une quelconque des revendications précédentes,
**caractérisé en ce que**
le pont de circuit (78) est monté en série avec le dispositif d'antenne (76).

4. Dispositif de scellage selon la revendication 3,
**caractérisé en ce que**
le pont de circuit (78) est formé d'une partie d'enroulement du dispositif d'antenne (76).

5. Dispositif de scellage selon l'une quelconque des revendications précédentes,
**caractérisé en ce que**
le pont de circuit (84) est monté en parallèle avec le dispositif d'antenne (82).

6. Dispositif de scellage selon la revendication 5,
**caractérisé en ce que**
le pont de circuit (93) est monté en série avec un second dispositif d'antenne (91).

7. Dispositif de scellage selon la revendication 6,
**caractérisé en ce que**
le pont de circuit (93) est formé d'une partie d'enroulement du second dispositif d'antenne (91).

8. Dispositif de scellage selon l'une quelconque des revendications précédentes,
**caractérisé en ce que**
le dispositif de liaison (26) situé au dispositif de fixation (22, 77, 87, 95) et le dispositif de connexion (27) situé au corps de scellage (21, 73, 79, 94) forment un dispositif de contact (28) façonné en forme d'un dispositif de connexion par encliquetage.

9. Dispositif de scellage selon l'une quelconque des revendications précédentes,
**caractérisé en ce que**
le dispositif de contact est façonné en forme d'une connexion non-séparable.

10. Dispositif de scellage selon la revendication 8,
**caractérisé en ce que**
le dispositif de contact (28, 70) est réalisé en forme d'un dispositif de connexion destiné pour une seule application.

11. Dispositif de scellage selon la revendication 10,
**caractérisé en ce que**
le dispositif de liaison et/ou le dispositif de connexion présente/présentent une pièce de déformation.

12. Dispositif de scellage selon l'une quelconque des revendications précédentes,
**caractérisé en ce que**
le dispositif de fixation (22) est façonné en forme d'un fil conducteur.

13. Dispositif de scellage selon l'une quelconque des revendications 1 à 11,
**caractérisé en ce que**
le dispositif de fixation (77, 87, 95) est formé d'un prolongement d'un seul tenant du corps de scellage.

14. Dispositif de scellage selon la revendication 13,
**caractérisé en ce que**
le dispositif de fixation (77, 87, 95) présente un pont de circuit (25, 78, 84, 93) qui est formé d'une matière plastique conductrice.

15. Dispositif de scellage selon l'une quelconque des revendications 12 à 14,
**caractérisé en ce que**
le dispositif de fixation (77, 87, 95) présente une pluralité de fibres électriquement conductrices afin de former le pont de circuit (25, 78, 84, 93).
